# DEMANDE DE BREVET EUROPEEN

(11) **EP 1 640 740 A2**
(43) Date de publication de la demande: **29.03.2006**
(21) Numéro de dépôt: 05291954.5
(22) Date de dépôt: 21.09.2005
(51) Int. Cl.: G01S 7/20, G01S 7/22, F41G 5/08

(54) **Interface homme machine d'un système de traitement de menaces**

(30) Priorité: 23.09.2004 FR 0410066
(71) Demandeur: GIAT Industries, 78000 Versailles (FR)
(72) Inventeur: Echalier, Sylvie, 75016 Paris (FR); Kujawa, Laurence, 78190 Trappes (FR)
(74) Mandataire: Célanie, Christian

(57) **Abrégé**

L'invention concerne une interface homme machine (2) d'un système de traitement (1) des menaces (4) pouvant menacer un bâtiment (3), ledit système (1) comportant au moins un moyen de détection (5) de menace (4), au moins un moyen de riposte (6), ladite interface comportant une rosace (11) représentative de l'environnement du bâtiment, ladite rosace étant un diagramme en coordonnées polaires où l'angle représente le gisement et le rayon représente le site.

L'invention concerne aussi une méthode de mise en oeuvre de cette interface homme machine, ainsi que tout système intégrant ladite interface ou mettant en oeuvre ladite méthode.

## Description

Le secteur technique de la présente invention est celui des systèmes de traitement des menaces dirigées contre un bâtiment et plus particulièrement celui des interfaces homme machine de tels systèmes.

Il n'est connu à ce jour aucun système de traitement des menaces. Un équipage d'un bâtiment dispose de moyens de détection, principalement visuels, et de commandes principalement manuelles, de moyens de riposte. L'équipage, composé d'un ou plusieurs opérateurs, assure le traitement des menaces en actionnant les ripostes en fonction des détections. La présente invention vise à intégrer le traitement des menaces dans un système de traitement semi-automatique afin d'assister l'équipage dans sa mission.

L'invention a pour objet une interface homme machine d'un système de traitement des menaces pouvant menacer un bâtiment, ledit système comportant au moins un moyen de détection de menace, au moins un moyen de riposte, ladite interface comportant une rosace représentative de l'environnement du bâtiment.

Avantageusement et selon l'invention, la rosace est un diagramme en coordonnées polaires où l'angle représente le gisement et le rayon représente le site.

Avantageusement, le gisement est un secteur compris entre -180° et 180°et le site est un secteur compris entre -90° et 90°.

Selon une autre caractéristique de l'invention, un symbole graphique, indiquant le type d'une menace, est localisé sur la rosace en fonction de la situation spatiale de ladite menace.

Avantageusement, le symbole graphique est un rond ou un soleil, fixe ou clignotant, pouvant prendre différentes couleurs, le cas échéant surchargé d'un libellé.

Selon une autre caractéristique de l'invention, le secteur de détection d'un moyen de détection est représenté sur la rosace par une couleur propre associée audit moyen de détection.

Selon une autre caractéristique de l'invention, le champ d'action d'un moyen de riposte est représenté sur la rosace par une couleur propre associée audit moyen de riposte.

Selon une autre caractéristique de l'invention, le gabarit d'un moyen de détection ou de riposte mobile est représenté sur la rosace par un contour en surépaisseur.

Selon une autre caractéristique de l'invention, l'interface homme machine comprend une représentation graphique active des moyens de détection et une représentation graphique active des moyens de riposte, superposées à une représentation graphique du bâtiment à une position relative indicative de la localisation sur le bâtiment desdits moyens.

Avantageusement la représentation graphique d'un moyen de détection ou d'un moyen de riposte reprend la couleur propre associée audit moyen.

Selon une autre caractéristique avantageuse de l'invention la représentation graphique des moyens de détection, la représentation graphique des moyens de riposte et la représentation graphique du bâtiment sont placées au centre de la rosace.

Selon encore une autre caractéristique de l'invention l'interface homme machine comprend une première rosace informative détaillée combinée avec une représentation graphique du bâtiment, des moyens de détection et des moyens de riposte, réduite et une seconde rosace de commande simplifiée combinée avec une représentation graphique du bâtiment, des moyens de détection et des moyens de riposte, agrandie.

Les moyens de détection comprennent au moins une caméra vidéo, un viseur de veille, un viseur de masque, un viseur panoramique, une couronne de caméras vidéo fixes, au moins une caméra mobile en site et en gisement, un détecteur d'alerte laser, un détecteur de départ de coup, un détecteur d'optique pointée ou tout autre moyen de détection.

Les moyens de riposte comprennent un télémètre, un laser de désignation, un brouilleur d'optique pointée, un fumigène large bande, un dispositif d'identification au combat, au moins une arme ou tout autre moyen de riposte.

Selon une autre caractéristique de l'invention, l'interface homme machine comprend un moyen de commande comprenant des moyens pour commander une action parmi ANNULER DETECTION, CONFIRMER DETECTION, RECOPIER, RALLIER, ASSERVIR, DEBRAYER, ZOOM, VALIDER et ANNULER.

Selon encore une autre caractéristique de l'invention, l'interface homme machine comprend des calques d'affichage individuellement affichables.

Selon un mode de réalisation particulièrement avantageux de l'invention, la représentation graphique du bâtiment, la représentation graphique active des moyens de détection, la représentation graphique active des moyens de riposte, le moyen de commande et la ou les rosaces sont réalisés au moyen d'un écran tactile.

L'invention concerne aussi une méthode de traitement des menaces dirigées contre un bâtiment, utilisant une interface homme machine selon l'une quelconque des caractéristiques précédentes, manoeuvrée par un opérateur, comprenant les étapes successives suivantes :
- un des moyens de détection de menace du système détecte une menace caractérisée par son type, d'éventuels attributs d'identification, et sa localisation en site et gisement,
- l'interface homme machine affiche un symbole graphique correspondant au type de la menace à la position correspondante en site et gisement sur la rosace, en mode clignotant,
- l'interface homme machine émet éventuellement un signal sonore,
- l'interface homme machine attend une commande de l'opérateur.

Cette méthode se poursuit par les étapes successives suivantes :
- l'opérateur commande par le moyen de commande l'action ANNULER DETECTION,
- l'opérateur sélectionne la menace à annuler en actionnant le symbole graphique actif correspondant représenté sur la rosace,
- l'opérateur commande par le moyen de commande l'action VALIDER,
- l'interface homme machine efface le symbole graphique de la menace, et le cas échéant stoppe l'émission du signal sonore.

Alternativement, la méthode de traitement se poursuit par les étapes successives suivantes :
- l'opérateur commande par le moyen de commande l'action CONFIRMER DETECTION,
- l'opérateur sélectionne la menace à confirmer en actionnant le symbole graphique actif correspondant représenté sur la rosace,
- l'opérateur commande par le moyen de commande l'action VALIDER,
- l'interface homme machine affiche le symbole graphique correspondant au type de la menace à la position correspondante en site et gisement sur la rosace en mode fixe.

L'invention concerne aussi une méthode de traitement des menaces dirigées contre un bâtiment, utilisant une interface homme machine selon l'une quelconque des caractéristiques précédentes, manoeuvrée par un opérateur, comprenant les étapes successives suivantes :
- l'opérateur commande par le moyen de commande l'action RECOPIER,
- l'opérateur sélectionne le moyen de détection à recopier en actionnant la représentation graphique active de ce moyen de détection,
- l'opérateur commande par le moyen de commande l'action VALIDER,
- l'interface homme machine transmet l'ordre de recopie de l'image dudit moyen de détection sur un écran de visualisation prédéfini.

L'invention concerne aussi une méthode de traitement des menaces dirigées contre un bâtiment, utilisant une interface homme machine selon l'une quelconque des caractéristiques précédentes, manoeuvrée par un opérateur, comprenant les étapes successives suivantes :
- l'opérateur commande par le moyen de commande l'action RALLIER,
- l'opérateur sélectionne le moyen de détection ou le moyen de riposte mobile destinataire à rallier en actionnant la représentation graphique active de ce moyen destinataire,
- l'opérateur sélectionne le moyen de détection ou le moyen de riposte source du ralliement en actionnant la représentation graphique active de ce moyen source,
- l'opérateur commande par le moyen de commande l'action VALIDER,
- l'interface homme machine transmet l'ordre de ralliement dudit moyen destinataire sur l'orientation dudit moyen source.

L'invention concerne aussi une méthode de traitement des menaces dirigées contre un bâtiment, utilisant une interface homme machine selon l'une quelconque des caractéristiques précédentes, manoeuvrée par un opérateur, comprenant les étapes successives suivantes :
- l'opérateur commande par le moyen de commande l'action ASSERVIR,
- l'opérateur sélectionne le moyen de détection ou le moyen de riposte mobile destinataire à asservir en actionnant la représentation graphique active de ce moyen destinataire,
- l'opérateur sélectionne le moyen de détection ou le moyen de riposte source de l'asservissement en actionnant la représentation graphique active de ce moyen source,
- l'opérateur commande par le moyen de commande l'action VALIDER,
- l'interface homme machine transmet l'ordre d'asservissement dudit moyen destinataire sur l'orientation dudit moyen source.

Avantageusement la méthode de traitement comprend une étape supplémentaire finale dans laquelle l'interface homme machine affiche une représentation graphique d'un lien d'asservissement entre la représentation graphique du moyen destinataire et la représentation graphique du moyen source.

Selon un premier mode de réalisation de l'invention la représentation graphique du lien d'asservissement entre le moyen destinataire et le moyen source est une figure graphique reliant la représentation graphique du moyen destinataire et la représentation graphique du moyen source.

Selon un second mode de réalisation de l'invention la représentation graphique du lien d'asservissement entre le moyen destinataire et le moyen source est un symbole de la couleur propre associée au moyen source superposé sur la représentation graphique du moyen destinataire.

L'invention concerne aussi une méthode de traitement des menaces dirigées contre un bâtiment, utilisant une interface homme machine selon l'une quelconque des caractéristiques précédentes, manoeuvrée par un opérateur, comprenant les étapes successives suivantes :
- l'opérateur commande par le moyen de commande l'action DEBRAYER,
- l'opérateur sélectionne le moyen de détection ou le moyen de riposte mobile source à débrayer en actionnant la représentation graphique active de ce moyen source,
- l'opérateur commande par le moyen de commande l'action VALIDER,
- l'interface homme machine transmet l'ordre de débrayage dudit moyen source,
- l'interface homme machine supprime, le cas échéant, la représentation graphique du lien d'asservissement entre la représentation graphique du moyen destinataire et la représentation graphique du moyen source.

Avantageusement l'invention remplace la première étape précédente par les deux étapes suivantes :
- l'opérateur commande par le moyen de commande l'une des actions parmi RECOPIER, RALLIER, ASSERVIR, DEBRAYER ou ZOOM,
- l'interface homme machine affiche la rosace de commande.

L'invention concerne aussi tout système de traitement des menaces dirigées contre un bâtiment, comprenant une interface homme machine selon l'une quelconque des caractéristiques précédentes, ou mettant en oeuvre une méthode selon l'une quelconque des caractéristiques précédentes.

Un avantage de l'interface, du système ou de la méthode selon l'invention est de permettre de rassembler toutes les informations pertinentes sous un même affichage clair et lisible rapidement.

Un autre avantage de l'invention est d'unifier le mode opératoire d'utilisation tant des moyens de détection que des moyens de riposte.

D'autres caractéristiques, détails et avantages de l'invention ressortiront plus clairement de la description détaillée donnée ci-après à titre indicatif en relation avec des dessins sur lesquels :
- la figure 1 présente un bâtiment protégé par le système, dans son environnement,
- la figure 2 présente le système de repérage de l'environnement,
- la figure 3 montre illustre l'utilisation d'une rosace selon l'invention,
- la figure 4 illustre des exemples de symboles graphiques représentatifs de menaces,
- la figure 5a illustre le secteur de détection d'un moyen de détection ou le champ d'action d'un moyen de riposte,
- la figure 5b illustre la représentation de ce secteur de détection ou de ce champ d'action sur la rosace,
- la figure 6a illustre le gabarit d'un moyen mobile,
- la figure 6b illustre la représentation de ce gabarit sur la rosace,
- la figure 7a montre des exemples de représentation graphique de moyen,
- la figure 7b illustre une représentation de moyens superposée à une représentation graphique du bâtiment,
- les figures 8a et 8b illustrent un exemple de rosace informative,
- la figure 9 illustre un exemple de rosace de commande,
- la figure 10 présente un exemple de réalisation d'un moyen de commande,
- les figures 11a, 11b, 11c et 11d montrent des exemples de représentations graphiques d'un lien d'asservissement.

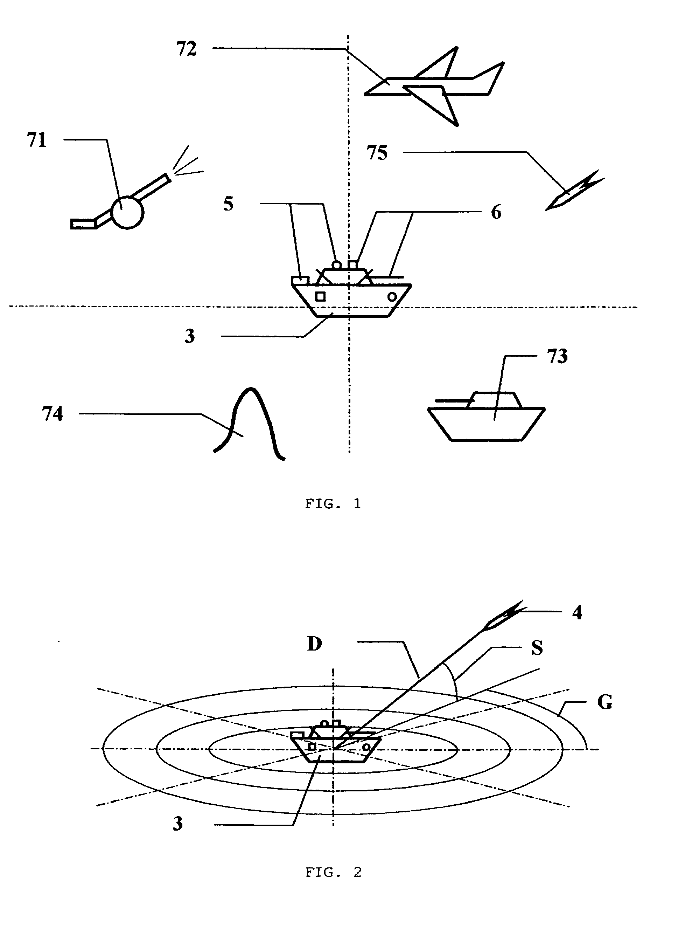

La figure 1, montre, dans son environnement, un bâtiment 3 du type de ceux protégeables par un système 1 objet de la présente invention. La figure 1 présente un bâtiment 3 figuré par engin blindé roulant. L'invention s'applique aussi à un bâtiment volant, naviguant, sous-marin ou même fixe. Dans son environnement, le bâtiment est amené à côtoyer d'autres objets 71, 72, 73, 74, 75 pouvant être des bâtiments divers terrestres 71, volants 72, mobiles 73, amis ou ennemis, des objets naturels 74 ou des projectiles 75. Ces objets, particulièrement lorsqu'il s'agit d'ennemis, peuvent se révéler menaçants. Un système objet de la présente invention a pour but de :
- détecter ou d'aider un équipage servant le bâtiment 3 à détecter tout objet de l'environnement,
- collecter les informations nécessaires sur cet objet pour déterminer dans quelle mesure il constitue une menace et ainsi,
- aider à la prise de décision concernant la riposte à adopter et enfin,
- mettre en oeuvre ou d'aider à mettre en oeuvre les moyens de riposte.

Pour atteindre ce but le bâtiment 3 est équipé de moyens de détection 5 capables de détecter et/ou de caractériser un objet/menace et de moyens de riposte 6. Le détail des moyens de détection 5 et des moyens de riposte 6 sera décrit plus loin.

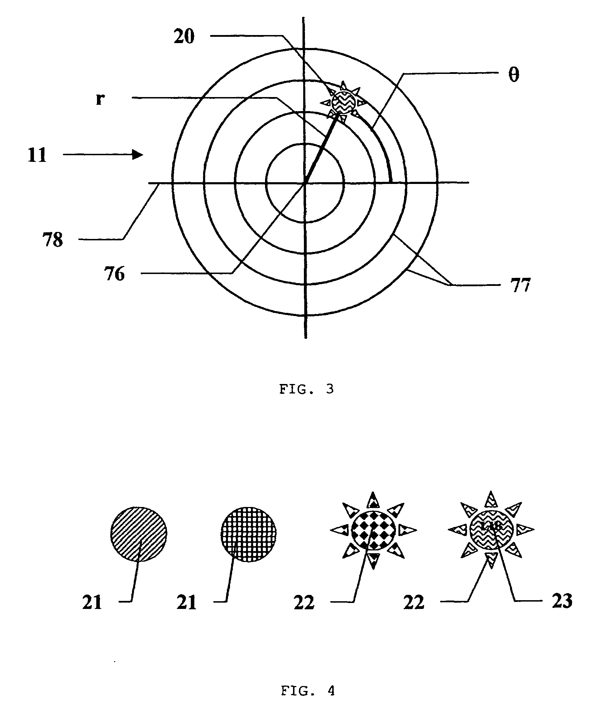

La figure 2 illustre le référentiel utilisé pour localiser les menaces 4 dans l'environnement entourant le bâtiment 3. Un repère polaire centré sur le bâtiment 3 est avantageusement utilisé. L'origine du repère est en permanence placée au niveau du bâtiment 3, même lorsque ce dernier se déplace. Dans un tel repère une menace 4 située en un point de l'espace est repérée par l'indication de deux angles : site S (angle repéré par rapport au plan horizontal) et gisement G (angle repéré par rapport à une direction donnée, par exemple un repère véhicule), et d'une distance D entre la menace 4 considérée et le bâtiment 3. Certains moyens de détection 5 permettent de connaître la distance D entre une menace 4 et le bâtiment 3. D'autres ne permettent que de connaître les angles de site S et de gisement G. Les moyens de riposte 6, quand ils ne sont pas omnidirectionnels, sont caractérisés par une direction d'action. Aussi, l'interface homme machine 2 objet de l'invention se concentre sur un repérage en site et gisement. Une menace 4 est principalement repérée par sa localisation en direction, à savoir son site S et son gisement G relativement au bâtiment 3.

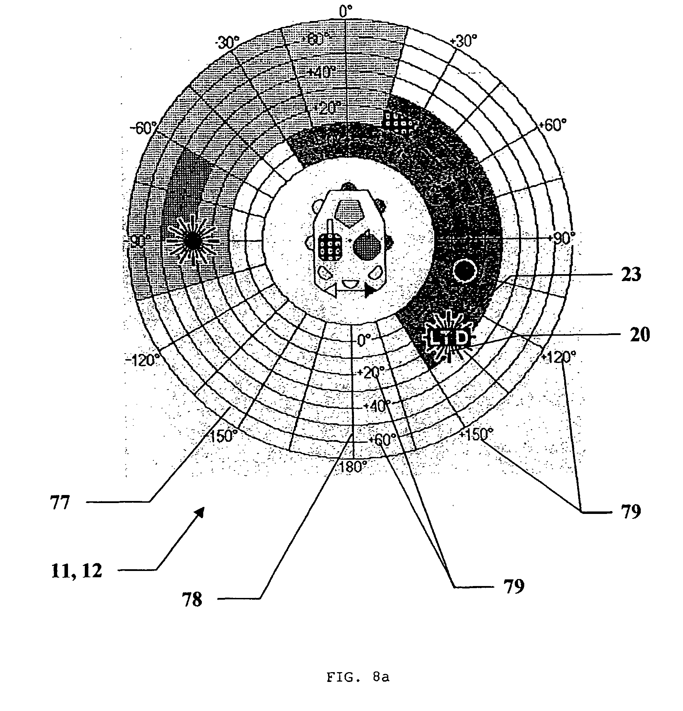

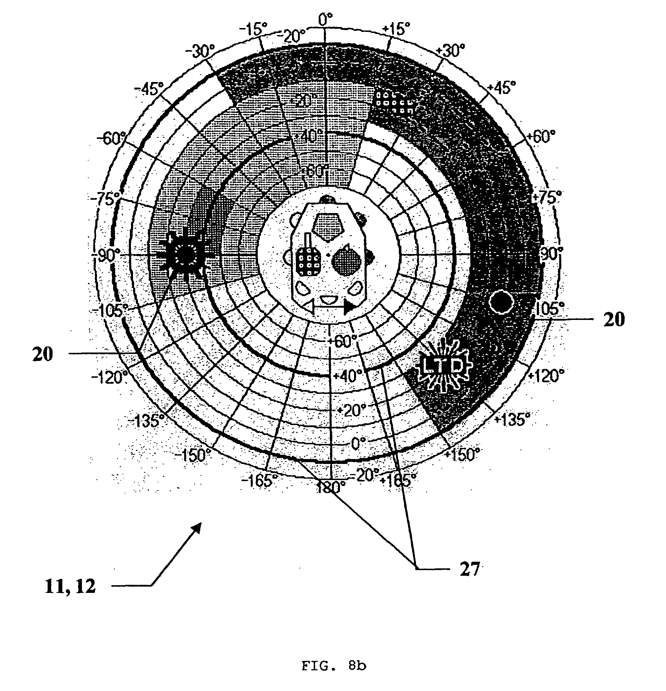

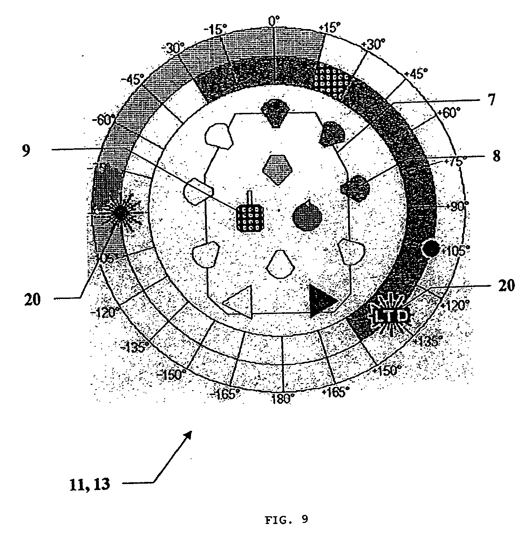

Une caractéristique essentielle de l'interface homme machine 2 objet de la présente invention est l'utilisation d'une rosace 11 pour cartographier l'environnement spatial du bâtiment 3. Comme illustré par la figure 3 une telle rosace 11 est constituée d'un diagramme en coordonnées polaires planes. Dans un tel diagramme, un point est repéré par une distance à l'origine 76 encore nommée rayon r et par un argument angulaire encore nommé angle θ. Une des caractéristiques importantes de l'invention est de faire correspondre à une direction de l'espace environnant le bâtiment 3 repérée respectivement en site S et en gisement G, un point dudit diagramme, repéré respectivement par un rayon r et un angle θ. Ainsi un cercle ou portion de cercle 77 concentrique à l'origine 76 représente des directions de l'environnement présentant un même angle de site S. De même une droite ou segment de droite 78 passant par l'origine 76 représente des directions de l'environnement présentant un même angle de gisement G. Ces (portions de) cercles 77 et ces (segment de) droites 78 peuvent respectivement être graduées en mesure angulaire de site et de gisement. Ces mesures peuvent être exprimées en toute unité angulaire (radians, gons, millièmes, degrés,...). Les figures 8a, 8b, 9 présentent un mode de réalisation en degrés. Les éléments de repère que constituent ces cercles 77 et ces droites 78 sont avantageusement régulièrement espacés. Il en est de même pour les graduations numériques 79. La figure 8a illustre par exemple un espacement de 10° pour les cercles 77 et de 20° pour les graduations 79 associées et un espacement de 15° pour les droites 78 et de 30° pour les graduations 79 associées. Le sens de repérage des angles de gisement peut être au choix horaire ou trigonométrique. Les figures présentent une représentation partiellement horaire (de 0° à 180°) et partiellement trigonométrique (de -180° à 0°). L'origine (0°) des mesures est avantageusement confondue avec le haut du diagramme. Cette origine coïncide avec celle retenue pour le pilotage du déplacement du bâtiment 3 en ce que le gisement 0° est confondu avec l'axe longitudinal du bâtiment 3 orienté vers l'avant. Le repérage des angles de site s'effectue sur la figure 8a avec des angles croissants de l'intérieur du diagramme vers l'extérieur. La convention contraire est aussi possible. La convention ici retenue considère un angle 0° pour l'horizontale, l'angle 90° figurant la verticale (zénith). Sur la figure 8a, la totalité de l'espace en gisement est représentée, avantageusement de - 180° à 180°. Il est possible de ne représenter qu'un secteur parmi la totalité des 360° degrés disponibles dans l'espace. En site l'exemple de la figure 8a présente un mode de réalisation figurant une partie de l'arc site. Cette partie est limitée par un secteur angulaire entre -10° et 70°, plage suffisante dans le cadre d'utilisation correspondant à cet exemple. L'application revendiquée utilise avantageusement tout secteur partiel ou total d'étendue en site comprise entre -90° et 90°.

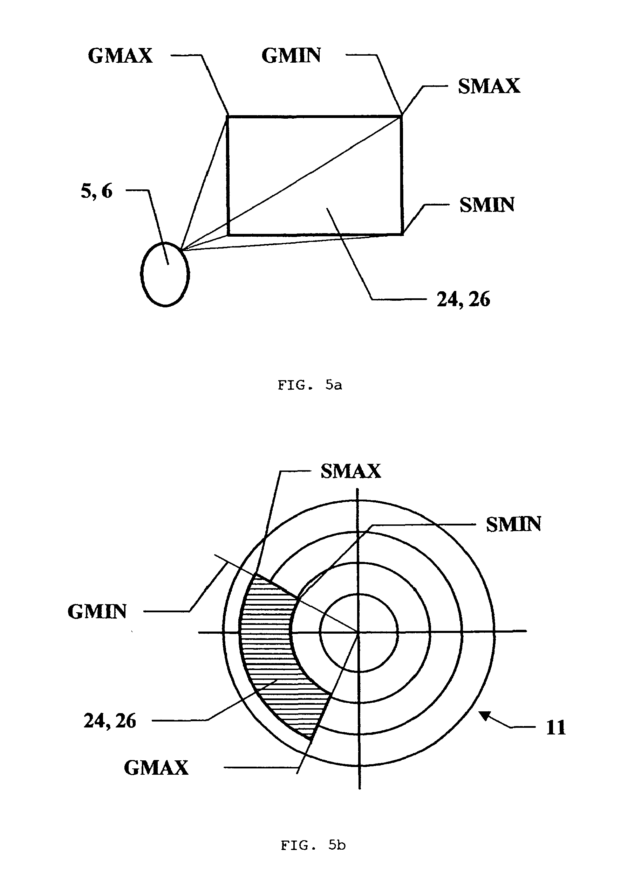

Sur la base d'un tel diagramme représentant l'environnement il est possible de figurer les localisations spatiales d'objets ou d'événements localisables en site et en gisement. Ainsi une menace 4 détectée est au moins connue par sa localisation en site S et en gisement G. Il est ainsi possible de représenter la localisation d'une telle menace 4 sur le diagramme de la rosace 11 de l'interface homme machine 2 en la situant au point du diagramme correspondant à cet angle de site S et à cet angle de gisement G. Dans l'interface homme machine 2 un symbole graphique 20 est placé audit point du diagramme. La figure 4 illustre des exemples de symboles graphiques 20 utilisables. Le symbole graphique 20 peut être un rond 21, un soleil 22 ou tout autre symbole. La couleur de ce symbole peut varier. Il peut être affiché en mode fixe ou en mode clignotant. Il est possible de faire varier tout autre attribut vidéo ou encore d'adjoindre au symbole graphique 20 un libellé 23 sur-imprimé. La figure 8a présente un exemple d'un symbole graphique 20 surchargé d'un libellé « LTD » 23. La forme ou les attributs graphiques de ce symbole graphique 20 peuvent être indicatifs d'autres attributs connus de la menace 4. Ainsi, par exemple, la couleur, la forme ou le libellé 23 sur-imprimé utilisé peut figurer le type de la menace. D'autres attributs de la menace peuvent être figurés. La couleur peut indiquer si la menace est un ami ou un ennemi. En effet, une menace 4 apparaît suite à une détection par un moyen de détection 5 et peut être produite par un autre bâtiment ami. Il en est ainsi par exemple d'un rayon laser ou d'un pointage d'une optique réalisée par un bâtiment ami qui est détecté par les moyens de détection 5 du bâtiment 3. On utilise avantageusement le jaune pour repérer un neutre/non identifié, le bleu pour repérer un ami et le rouge pour repérer un ennemi. Le libellé 23 peut, par exemple, indiquer en temps réel, lorsqu'elle est connue, la distance entre la menace 4 et le bâtiment 3. Un changement de couleur peut aussi indiquer une variation de la distance, ou encore de l'état de la menace : active, inactive, armée, fixe, mobile, détruite,... Le clignotement est, comme décrit dans la méthode, avantageusement utilisé pour indiquer une nouvelle menace 4 récemment détectée, son affichage devenant permanent lorsque la détection de la menace 4 est confirmée ou disparaissant lorsque la détection de la menace 4 est annulée.

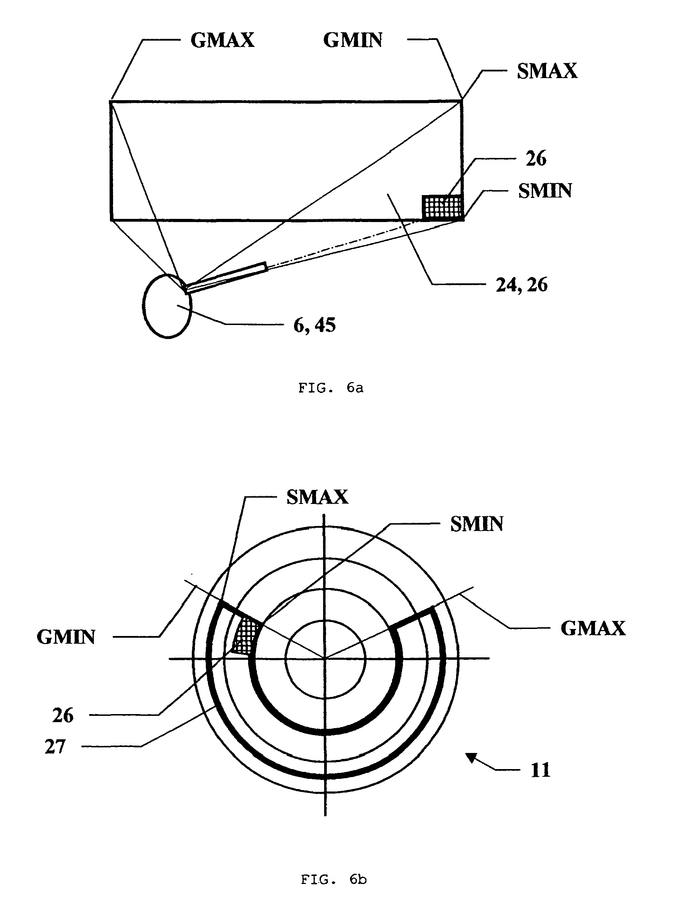

Sur cette base de représentation offerte par la rosace 11 et le diagramme représentant l'environnement, il est possible de figurer un secteur de détection 24 d'un moyen de détection 5. La figure 5a présente un moyen de détection 5. Ce moyen de détection 5 permet une détection utile dans une partie de l'environnement du bâtiment 3 que l'on désigne secteur de détection 24 et qui caractérise le moyen de détection 5. Abstraction faite de la portée en distance de ce moyen de détection 5, le secteur de détection 24 est limité par une zone que l'on peut circonscrire par deux angles de site extrêmes SMIN et SMAX et par deux angles de gisement extrêmes GMIN et GMAX. Un tel secteur de détection 24 peut être représenté sur le diagramme de la rosace 11 par un secteur 24 correspondant tel qu'illustré par la figure 5b. De manière analogue, un moyen de riposte 6 se caractérise par un champ d'action 26 définit par le capteur de vision associé à l'arme, que l'on peut circonscrire par deux angles de site extrêmes SMIN et SMAX et par deux angles de gisement extrêmes GMIN et GMAX. Un tel champ d'action 26 d'un moyen de riposte 6 peut être représenté sur le diagramme de la rosace 11 par un secteur 26 correspondant tel qu'illustré par la figure 5b. Dans le cas d'un moyen de détection 5 ou d'un moyen de riposte 6 couvrant toute la périphérie du bâtiment 3 l'angle GMIN peut être égal à l'angle GMAX. Le secteur de représentation 24, 26 sur la rosace 11 est alors un anneau. Un tel secteur 24, 26 est avantageusement rempli avec une couleur propre associée au moyen de détection 5 ou au moyen de riposte 6. Une couleur se définit ici comme un motif graphique qui peut être une couleur, un motif de gris, un motif de hachure ou tout autre texture uniforme identifiable présentant des caractéristiques d'affichage identiques. Le choix de cette couleur s'effectue de manière à faire ressortir les différents secteurs de détection 24 des différents moyens de détection 5 et/ou les différents champs d'action 26 des différents moyens de riposte 6, les uns par rapport aux autres. De même, l'ordre ou la priorité d'affichage est avantageusement choisi tel qu'il limite le masquage d'un secteur ou champ 24, 26 par un autre. Ainsi un petit secteur 24, 26 est avantageusement affiché au-dessus d'un autre secteur 24, 26 plus étendu. Il est bien évident que l'affichage des différents secteurs ou champs 24, 26 sur la rosace 11 est dynamique en ce qu'il est réactualisé dans le temps pour correspondre à une évolution de la configuration/position des moyens de détection 5 ou des moyens de riposte 6. Ainsi par exemple pour un moyen de détection 5 disposant d'un secteur de détection 24 limité en gisement mais mobile en gisement grâce à un tourelleau, la représentation du secteur de détection 24 sur la rosace 11 se déplace sur le diagramme en accord avec la rotation dudit tourelleau.

Certains moyens de détection 5 sont mobiles. Cette mobilité se présente en site et/ou en gisement, par exemple grâce à un montage desdits moyens sur un tourelleau. Une telle disposition peut permettre, malgré un secteur de détection 24 ou un champ d'action 26 réduit, d'étendre la zone utile de détection ou d'action. Les figures 6a et 6b illustrent le cas d'une arme 45 de type tourelle canon. Un tel moyen de riposte 6 présente un champ d'action 26 réduit. Cependant, grâce à la mobilité de la tourelle supportant ce moyen 6, 45, la zone utile est étendue à la totalité d'un gabarit 27 de l'arme 45. Ce gabarit 27 englobe toutes les positions angulaires en site et en gisement que peut prendre l'arme 45. Ce gabarit 27 est un secteur de l'espace limité par deux angles extrêmes en site SMIN et SMAX et par deux angles extrêmes en gisement GMIN et GMAX. Sur la rosace 11 de la figure 6b, la position courante de l'arme 45 est représentée dynamiquement par son champ d'action 26 et évolue lorsque l'arme 45 se déplace. Le gabarit est représenté par un contour 27 fixe. Ce contour 27 est avantageusement figuré sur la rosace par un trait en surépaisseur. Ceci permet à un opérateur de percevoir, sur un même diagramme d'affichage, la position courante d'un moyen de détection 5 ou de riposte 6 et son domaine complet d'opération représenté par le gabarit 27.

Un des intérêts essentiels de la représentation unifiée à l'aide de la rosace 11 est de permettre de superposer : les menaces 4, les moyens de détection 5 et les moyens de riposte 6 combinés avec leurs éventuels gabarits 27. Ceci permet d'un seul coup d'oeil de vérifier qu'un moyen de riposte est apte à répondre à une menace. En effet, si une menace 4 est située en dehors du champ d'action 26 d'un moyen de riposte 6 fixe ou en dehors du gabarit 27 d'un moyen de riposte 6 mobile, ce moyen de riposte 6 est inopérant contre ladite menace 4.

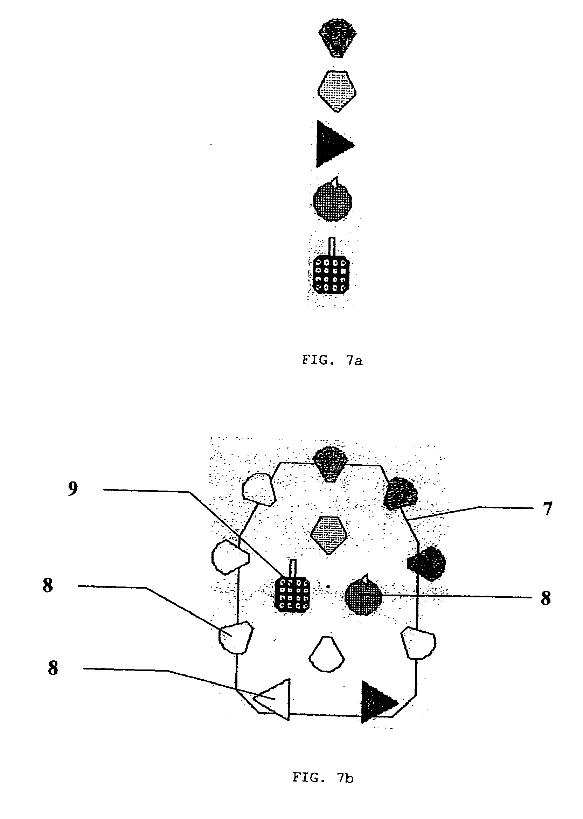

Avantageusement, en complément de l'affichage de toutes les informations pertinentes pour la prise d'une décision, l'interface homme machine 2 propose des outils permettant de commander les moyens de détection 5 ou les moyens de riposte 6. Selon un mode de réalisation particulier, est associé à chaque moyen de détection 5 une représentation graphique 8 et à chaque moyen de riposte 6 une représentation graphique 9. Ces représentations graphiques actives 8, 9 sont dites actives en ce qu'elles permettent de désigner et de commander les moyens 5, 6 correspondants. Ceci est par exemple réalisé au moyen d'un écran tactile permettant de réaliser un affichage graphique qui peut être utilisé comme un organe de désignation ou de commande. Ces représentations graphiques actives 8, 9 sont avantageusement représentées superposées sur une représentation graphique 7 du bâtiment 3. Un mode de réalisation avantageux consiste à représenter le bâtiment 3 par un plan schématique vu de dessus, sur lequel viennent se placer les représentations graphiques 8, 9 des moyens 5, 6 sensiblement à la place sur ledit plan que les moyens 5, 6 qu'elles représentent occupent sur le bâtiment réel 3. Différents exemples de symboles, de formes et de couleurs variées tels que ceux représentés à titre illustratif sur la figure 7a, peuvent être utilisés. Avantageusement une forme donnée est associée à un type de moyen de détection 5 ou de riposte 6. Ainsi une caméra vidéo peut être représentée par un demi-cercle et un viseur panoramique par un cercle fléché. La figure 7b représente une réalisation avec une représentation graphique 7 schématique du bâtiment 3, se réduisant à un contour figurant la forme du bâtiment 3. Sur cette représentation graphique 7, sont superposés les représentations graphiques 8, 9 de différents moyens de détection 5 ou de riposte 6 à la place qu'ils occupent sur le bâtiment 3.

Avantageusement, une couleur unique est associée en propre à chaque moyen de détection 5 ou à chaque moyen de riposte 6. Cette couleur est utilisée pour la représentation graphique 8, 9 dudit moyen 5, 6. Afin d'obtenir une bonne lisibilité de l'affichage, la couleur utilisée pour la représentation graphique 8, 9 du moyen 5, 6 est la même que celle utilisée pour représenter sur la rosace 11 son secteur de détection 24 ou son champ d'action 26.

Quelle que soit l'étendue en site de la rosace 11, elle présente avantageusement une forme annulaire et libère un espace libre en son centre. Cet espace est peu propice à un affichage représentatif de l'environnement, la réduction progressive de l'espace correspondant à un secteur de l'environnement ne permettant plus un affichage suffisamment précis. Cet espace laissé libre est avantageusement utilisé pour y placer, comme illustré sur les figures 8a, 8b ou 9, la représentation graphique 7 du bâtiment 3, les représentations graphiques 8 des moyens de détection 5 et les représentations graphiques 9 des moyens de riposte 6. La représentation graphique 7 indique l'orientation dudit bâtiment 3 et permet de distinguer l'avant de l'arrière. Avantageusement la représentation graphique 7 du bâtiment 3 est orientée en concordance avec l'orientation en gisement de la rosace 11. L'avant du bâtiment 3 est figuré aligné avec le 0° du gisement.

La rosace 11 telle que représentée sur la figure 9 présente une place réduite pour la représentation superposée des représentations graphiques 7, 8, 9 des moyens de détection 5, des moyens de riposte 6 et du bâtiment 3. Au contraire, l'espace dédié au diagramme de la rosace permet de bien détailler la position d'une menace ou les limites d'un secteur de détection 24 ou d'un champ d'action 26. Cette première rosace 12, adaptée aux informations de localisation, est appelée rosace informative 12 ou rosace d'information.

A contrario la rosace 11 de la figure 9 inverse les proportions. Ici l'espace central et les représentations graphiques 7, 8, 9 ont été fortement agrandies afin de bien les séparer et de bien faire apparaître les différentes représentations graphiques actives 7, 8, 9, permettant ainsi de sélectionner l'une d'elles, à l'aide d'un moyen de désignation (souris, joystick, doigt...) sans risque de confusion entre deux représentations graphiques voisines. Ceci s'effectue au détriment du diagramme de la rosace qui, représenté sur un espace plus faible est comprimé dans le sens radial correspondant à la direction du site. Cette compression se fait sans perte d'information. Toutes les indications, tant de menace 4 que de secteur de détection 24 ou de champ d'action 26 sont toujours présentes. Une perte de résolution en site est cependant inévitable, le gain de place s'effectuant par compression du diagramme dans la direction radiale du site. Cet affichage, privilégiant la partie centrale de l'affichage au détriment du diagramme périphérique est nommé rosace de commande 13. Avantageusement, les représentations graphiques 20 des menaces 4 sur le diagramme ne sont pas réduites. Ces dernières représentations sont actives, comme le montre la description ci-dessous, et il convient de leur conserver une surface suffisante pour permettre leur désignation.

Les moyens de détection 5 intégrés dans le système 1 peuvent comprendre tout imageur, capteur ou moyen de mesure permettant d'obtenir des informations sur les objets de l'environnement. Dans le cadre d'une application sur un bâtiment 3 militaire, ces moyens sont particulièrement orientés vers la détection, la reconnaissance et l'identification des objets pouvant constituer des menaces 4 potentielles. Ces moyens de détection 5 peuvent comprendre une ou plusieurs caméras vidéo 30. Les moyens de détection 5 peuvent comprendre un viseur 31 ou tout dispositif optique similaire

En présence d'une telle menace 4 ainsi détectée, l'équipage du bâtiment 3 dispose de plusieurs tactiques de riposte. Certaines de ces tactiques mettent en oeuvre des moyens de riposte 6 qui peuvent être contrôlés partiellement ou totalement au moyen de l'interface homme machine 2 objet de l'invention. Un moyen de riposte 6 peut être un télémètre 40. Le télémètre 40 permet en visant un objet de l'environnement, susceptible de constituer une menace 4, de mesurer la distance séparant ladite menace 4 du bâtiment 3. Cette mesure de distance permet de préciser la position de ladite menace 4 afin, le cas échéant, de préparer une riposte. Un autre moyen de riposte 6 est un fumigène 43. Un tel fumigène 43 produit une abondante fumée perturbant les moyens de détection, d'observation ou de mesure ennemis afin de protéger le bâtiment 3. Ce moyen est mis en oeuvre par déclenchement d'une cartouche pyrotechnique. De telles cartouches pyrotechniques peuvent être disposées en plusieurs postes répartis sur le bâtiment 3. L'opérateur peut alors avantageusement tirer profit des indications de localisation de la menace 4 afin de déclencher la cartouche la plus appropriée, c'est à dire dans le cas d'espèce, celle qui va produire un nuage de fumée s'intercalant entre le bâtiment 3 et la menace 4. L'intérêt de superposer la localisation de la menace 4 sur une rosace 11 présentant une représentation graphique 9 des moyens de riposte 6, incluant les fumigènes 43, figurant leur localisation sur une représentation graphique 7 du bâtiment 3, sur un même affichage apparaît ici clairement.

Certains moyens de riposte 6 sont directionnels. Ils nécessitent donc d'être orientés, avant leur utilisation, en direction de la menace 4. Ceci peut être réalisé en utilisant un ralliement. Le système 1 et l'interface homme machine 2, objets de la présente invention, permettent de réaliser un tel ralliement, ainsi qu'il sera décrit plus loin. Un autre moyen de riposte 6 peut être un moyen de neutralisation de la menace tel qu'une arme 45. Un bâtiment 3 équipé d'un système 1 selon l'invention peut être doté d'une ou plusieurs armes 45. Afin de pouvoir être utilisée, une telle arme 45 doit préalablement au tir être orientée en direction de la menace 4. Pour cela elle est avantageusement montée sur une tourelle ou tourelleau mobile en site et en gisement relativement au bâtiment 3. L'orientation de cette arme 45 par mobilisation en site et en gisement de sa tourelle/tourelleau afin de la faire pointer en direction de la menace 4, peut être réalisée sous le contrôle du système 1, en utilisant une fonction de ralliement ou d'asservissement basée sur la direction dans laquelle est détectée la menace 4 ou encore sur la direction du moyen de détection 5 ayant détecté la menace 4.

Il est bien évident pour l'homme de l'art que les principes décrits ici et illustrés pour certains moyens de détection 5 et certains moyens de riposte 6 sont généralisables à tout autre moyen de détection 5 ou de riposte 6.

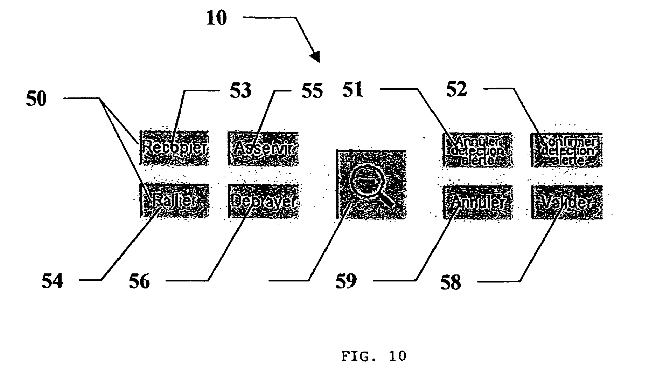

Afin de permettre sa mise en oeuvre, l'interface homme machine 2 comprend avantageusement un moyen de commande 10. Ce moyen de commande 10 comprend des moyens 50 pour commander des actions de l'interface. Ces actions comprennent des fonctions réalisables par les moyens de détection 5 ou les moyens de riposte 6 parmi lesquelles sont comprises : ANNULER DETECTION 51, CONFIRMER DETECTION 52, RECOPIER 53, RALLIER 54, ASSERVIR 55, DEBRAYER 56 et des fonctions de dialogue ou de pilotage de l'interface 2 parmi lesquelles sont comprises ZOOM 57, VALIDER 58 et ANNULER 59. Le moyen de commande 10 peut être un clavier ou un pupitre dont chaque moyen 50 pour commander est réalisé par une touche associée à une commande 51 à 59. Le moyen de commande 10 peut aussi être un écran tactile. La figure 10 présente un exemple de disposition des moyens 50 d'un moyen de commande 10. Chaque moyen 50 est reconnaissable en ce qu'il comporte un libellé 51 à 56, 58, 59 correspondant à l'action associée ou un pictogramme, tel une loupe pour l'action ZOOM 57. L'utilisation de ces moyens 50 pour commander des actions 51 à 59 du moyen de commande 10 est détaillée plus loin dans la description des méthodes d'utilisation de l'interface 2.

L'utilisation par l'équipage du bâtiment 3 de l'interface homme machine 2 objet de la présente invention peut conduire à une superposition d'informations rendant la lecture difficile ou ambiguë. L'utilisation de calques d'affichage est avantageuse pour permettre de faire apparaître à volonté les informations souhaitées. Chaque calque contient une information ou un type d'information et peut être affiché ou masqué à volonté. Ainsi un calque peut comprendre les informations relatives à un moyen de détection 5 ou à un moyen de riposte 6 : sa représentation graphique 8, 9, son secteur de détection 24 ou son champ d'action 26 et le cas échéant son gabarit 27. L'activation d'un tel calque entraîne l'affichage tous ces éléments. La désactivation les fait disparaître. Un calque peut ainsi être associé à tous les symboles graphiques 20 de menaces ou seulement à ceux d'un certain type (ami/ennemi ou encore par type de moyen de détection,...). Un calque peut aussi être associé aux graduations 79 du diagramme de la rosace 11, 12, 13 ou encore à une grille de ce même diagramme. Ces différents calques sont sélectionnés par un opérateur au moyen par exemple d'un second moyen de commande similaire au moyen de commande 10. Chaque calque est associé à une touche de ce second moyen de commande. Un premier appui sur la touche affiche le contenu du calque alors qu'alternativement un second appui sur la touche efface ledit contenu du calque. Ainsi l'opérateur peut à loisir composer, à chaque instant, l'affichage qui lui convient en faisant apparaître les calques correspondants aux informations pertinentes et en cachant les calques qui surchargent inutilement l'affichage.

Avantageusement la représentation graphique 7 du bâtiment 3, la représentation graphique active 8 des moyens de détection 5, la représentation graphique active 9 des moyens de riposte 6, le moyen de commande 10 et la ou les rosaces 11, 12, 13 sont réalisés au moyen d'un écran tactile. Un tel écran permet de combiner l'affichage d'informations, avec les attributs (couleur, clignotement, réactualisation,...) nécessaires et la réalisation de commandes superposées avec une représentation graphique. On convient d'appeler actives de telles représentations graphiques permettant de commander.

La structure de l'interface homme machine 2 a jusqu'ici été décrite par le menu. La suite décrit des méthodes privilégiées de mise en oeuvre de cette interface 2.

Au commencement, le système 1 est en veille, ses moyens de détection 5 sont en alerte afin de détecter, chacun dans son domaine, l'apparition d'une menace 4. Cette apparition se produit suite à l'entrée d'une menace 4 dans le secteur de détection 24 d'un au moins des moyens de détection 5. Ceci est consécutif au déplacement de la menace 4 ou du bâtiment 3. Le moyen de détection 5 détecte la menace 4, mesure les paramètres de ladite menace 4 et transmet au système 1 une information de détection comprenant le type et lesdits paramètres (site, gisement, distance, ami/ennemi,...) de ladite menace 4. L'interface homme machine 2 traite ces informations et affiche sur le diagramme de la rosace 11 un symbole graphique 20 correspondant au type de la menace et aux paramètres. Ainsi si une menace 4 est détectée de type LTD, l'interface 2 affiche sur la rosace 11 un soleil surchargé d'un libellé "LTD", localisé au site et gisement de la rosace 11 correspondant aux angles de site et de gisement détectés. Ceci est illustré aux figures 8a, 8b et 9. Le soleil peut être affiché JAUNE dans un premier temps pour figurer une menace NEUTRE (en attente de son classement entre AMI et ENNEMI). Il peut aussi être clignotant afin d'attirer l'attention de l'opérateur en lui signalant que cette menace est nouvellement apparue en attente d'une CONFIRMATION DETECTION ou d'une ANNULATION DETECTION. Cet affichage peut, dans le cas d'une menace 4 critique, se voir redonder par l'émission d'un signal sonore par l'interface 2. L'interface 2 se place ensuite en attente d'une action de commande de l'opérateur.

L'opérateur averti de l'occurrence d'une nouvelle menace 4, identifiable comme nouvelle par le clignotement du symbole graphique 20, peut répondre par un premier niveau de traitement. Il dispose de deux commandes ANNULER DETECTION 51 et CONFIRMER DETECTION 52 lui permettant de classer ladite menace 4. Dans le premier cas, l'opérateur choisi d'ignorer la menace 4. Ceci peut être motivé par le fait que cette menace 4 est secondaire par rapport à une autre plus prioritaire ou encore par le fait que l'opérateur identifie cette menace 4 comme une fausse alerte. Pour cela l'opérateur active l'action ANNULER DETECTION 51 par la touche idoine du moyen de commande 10. L'opérateur désigne ensuite la menace 4 qu'il désire annuler parmi celles affichées sur la rosace 11 en actionnant son symbole graphique actif 20 sur la rosace 11. L'opérateur confirme ensuite avantageusement sa commande par une action sur la touche VALIDER 58 du moyen de commande 10. En réponse à cette validation, l'interface homme machine 2 efface le symbole graphique 20 correspondant à la menace 4 choisie. Si cette menace 4 avait préalablement été accompagnée de l'émission d'un signal sonore et que ce signal perdure, l'interface 2 stoppe l'émission de ce signal sonore.

Alternativement, l'opérateur peut opter pour une confirmation de détection de la menace 4. Pour cela l'opérateur active l'action CONFIRMER DETECTION 52 par la touche idoine du moyen de commande 10. L'opérateur désigne ensuite la menace 4 qu'il désire confirmer parmi celles affichées sur la rosace 11 en actionnant son symbole graphique actif 20 sur la rosace 11. L'opérateur confirme ensuite avantageusement sa commande par une action sur la touche VALIDER 58 du moyen de commande 10. En réponse à cette validation, l'interface homme machine 2 stoppe le clignotement et affiche en mode fixe le symbole graphique 20 correspondant à la menace 4 choisie. L'affichage du symbole graphique 20 est localisée sur la rosace en site et en gisement correspondant à sa position dans l'environnement. Cette localisation est réactualisée régulièrement en fonction des éventuelles nouvelles détections réalisées.

A tout moment, afin de tirer le meilleur parti de l'interface 2 homme machine, l'opérateur peut piloter certains des moyens de détection 5 ou certains des moyens de riposte 6 au moyen d'actions permettant de commander le comportement de ces moyens 5, 6. L'opérateur peut ainsi RECOPIER 53, RALLIER 54, ASSERVIR 55 ou encore DEBRAYER 56.

L'action RECOPIER 53 s'applique à un moyen de détection 5 de prise d'image, par exemple une caméra. Une telle caméra fixe ou mobile est destinée à fournir une image dont le contenu est analysé par l'opérateur. Ce dernier dispose pour afficher des images, d'au moins un écran de visualisation dont un, prédéfini, est plus particulièrement destiné à recevoir l'image recopiée. L'opérateur dispose le plus souvent dans un système 1 de plusieurs caméras. L'action RECOPIER 53 permet de sélectionner laquelle parmi ces caméras est recopiée sur l'écran de visualisation prédéfini. L'opérateur commande l'action RECOPIER 53 par l'intermédiaire de la touche correspondante du moyen de commande 10. Il sélectionne ensuite la caméra souhaitée en actionnant la représentation graphique 8 de cette caméra/moyen de détection 5. L'opérateur confirme ensuite avantageusement sa commande par une action sur la touche VALIDER 58 du moyen de commande 10. En réponse à cette validation, l'interface homme machine 2 transmet l'ordre de recopie de l'image de la caméra vers l'écran de visualisation prédéfini.

L'action RALLIER 54 s'applique à un moyen de détection 5 ou à un moyen de riposte 6 mobile ou multiple. Un tel moyen 5, 6 est dit mobile lorsqu'il est orientable en site et/ou en gisement. Un tel moyen 5, 6 est dit multiple lorsqu'il est constitué de plusieurs moyens complémentaires. Il en est ainsi d'une couronne de caméras dont les champs se complètent. Le ralliement consiste dans ce cas à sélectionner la ou les caméras destinataires 62 visant au mieux la direction indiquée par le moyen source 61 parmi les caméras de la couronne. Le ralliement d'un tel moyen destinataire 62, sur un autre moyen source 61, pouvant être un moyen de détection ou de riposte, consiste à déplacer le moyen destinataire 62 jusqu'à faire coïncider son orientation en site et/ou en gisement avec celle du moyen source 61. L'opérateur commande l'action RALLIER 54 par l'intermédiaire de la touche correspondante du moyen de commande 10. Il sélectionne ensuite le moyen destinataire 62 souhaité en actionnant la représentation graphique 8 de ce moyen 62. Il sélectionne ensuite le moyen source 61 souhaité en actionnant la représentation graphique 8 de ce moyen 61. On remarque que le moyen source 61 peut être un moyen mobile ou fixe, pour peu qu'il indique une direction, typiquement par son axe de visée. L'opérateur confirme ensuite avantageusement sa commande par une action sur la touche VALIDER 58 du moyen de commande 10. En réponse à cette validation, l'interface homme machine 2 transmet l'ordre de ralliement du moyen destinataire 62 sur la direction en site et/ou en gisement du moyen source 61.

L'action ASSERVIR 55 s'applique à un moyen de détection 5 ou à un moyen de riposte 6 mobile ou multiple. Un tel moyen 5, 6 est dit mobile lorsqu'il est orientable en site et/ou en gisement. Un tel moyen 5, 6 est dit multiple lorsqu'il est constitué de plusieurs moyens complémentaires. A la différence du ralliement qui est une action ponctuelle s'effectuant une seule fois, l'asservissement se poursuit dans le temps et un lien est créé entre le moyen source 61 et le moyen destinataire 62. Le moyen destinataire 62 continue de se déplacer afin de suivre les mouvements du moyen source 61. Ainsi par exemple, si une tourelle arme est asservie sur une caméra mobile, l'arme resté en permanence pointée vers ce que voit la caméra. Ainsi l'opérateur qui commande le mouvement de ladite caméra commande indirectement en parallèle le mouvement de l'arme, qui reste en permanence pointée vers ce que l'opérateur observe via la caméra. Une riposte avec l'arme peut, le cas échéant, rapidement être mise en oeuvre dès que l'opérateur détecte une menace par observation de l'image vidéo issue de ladite caméra. L'asservissement d'un moyen destinataire 62, sur un autre moyen source 61, consiste à déplacer le moyen destinataire 62 jusqu'à faire coïncider son orientation en site et/ou en gisement avec celle du moyen source 61 et ensuite à poursuivre le déplacement du moyen destinataire 62 afin que son orientation reste en coïncidence avec celle du moyen source 61 à tout instant, même lorsque le moyen source 61 se déplace. L'opérateur commande l'action ASSERVIR 55 par l'intermédiaire de la touche correspondante du moyen de commande 10. Il sélectionne ensuite le moyen destinataire 62 souhaité en actionnant la représentation graphique 8 de ce moyen 62. Il sélectionne ensuite le moyen source 61 souhaité en actionnant la représentation graphique 8 de ce moyen 61. L'opérateur confirme ensuite avantageusement sa commande par une action sur la touche VALIDER 58 du moyen de commande 10. En réponse à cette validation, l'interface homme machine 2 transmet l'ordre d'asservissement du moyen destinataire 62 sur la direction en site et/ou en gisement du moyen source 61. Un asservissement débute comme un ralliement, mais le lien d'asservissement entre le moyen source 61 et le moyen destinataire 62 est maintenu jusqu'au contre ordre.

Afin de garder une mémoire de ce lien d'asservissement qui se poursuit dans le temps au delà de sa commande de mise en oeuvre, une représentation graphique 28 du lien d'asservissement est avantageusement affichée par l'interface homme machine 2. Cette représentation graphique 28 met en correspondance et en relation les représentations graphiques respectives du moyen source 61 et du moyen destinataire 62.

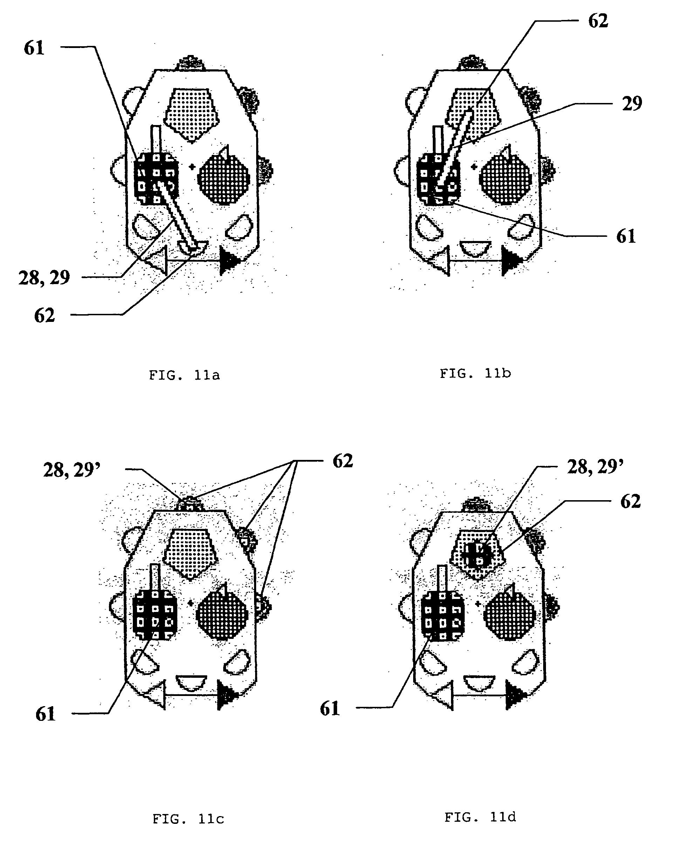

Cette représentation graphique 28 peut être une figure graphique 29 reliant la représentation graphique du moyen destinataire 62 et la représentation graphique du moyen source 61. Cette figure graphique 29 peut être un contour entourant ensemble les deux représentations graphiques 61, 62, un trait joignant les deux représentations graphiques, une flèche ou tout autre dessin similaire figurant une liaison entre les deux représentations graphiques. Les figures 11a et 11b illustrent des exemples d'utilisation d'une figure graphique 29 de type trait.

Alternativement, cette représentation graphique 28 peut être un symbole 29', réalisé avec la couleur propre associée au moyen source 61, affiché en superposition sur la représentation graphique 62 du moyen destinataire. Ce symbole peut être un point, un rond, un symbole reprenant la forme de la représentation graphique 61 du moyen source ou tout autre symbole. Un tel symbole 29' est choisi plus petit que la représentation graphique 61 afin de ne pas masquer cette dernière. Il est, bien évidemment, possible de réaliser le contraire à savoir un symbole 29' de la couleur du moyen destinataire 62 superposé à la représentation graphique 61 du moyen source. Les figures 11c et 11d illustrent des exemples d'utilisation de tels symboles 29'.

L'action DEBRAYER 56 est le contre ordre de l'action ASSERVIR. Le débrayage consiste à supprimer un lien d'asservissement. L'opérateur commande l'action DEBRAYER 56 par l'intermédiaire de la touche correspondante du moyen de commande 10. Il sélectionne ensuite le moyen source 61 souhaité en actionnant la représentation graphique 8 de ce moyen 61. L'opérateur confirme ensuite avantageusement sa commande par une action sur la touche VALIDER 58 du moyen de commande 10. En réponse à cette validation, l'interface homme machine 2 transmet l'ordre de débrayage/fin d'asservissement du moyen destinataire 62 sur le moyen source 61. Il est envisageable de sélectionner de manière équivalente le moyen destinataire 62. Si une représentation graphique 28 du lien d'asservissement existait, elle est supprimée de l'affichage en conséquence.

Comme vu précédemment, l'interface homme machine 2 dispose de deux modes d'affichage : une rosace d'information 12 et une rosace de commande 13. La rosace d'information s'avère plus détaillée et permet d'afficher principalement les informations concernant les menaces 4. La rosace de commande 13 qui agrandit la zone centrale et donc les représentations graphiques 7 du bâtiment, des moyens de détection 8 et des moyens de riposte 9 est plus avantageuse pour réaliser une commande et notamment pour désigner un moyen de détection 5 ou un moyen de riposte 6. Le passage d'une rosace 12, 13 à l'autre s'effectue par une commande appropriée du moyen de commande 10 : la commande ZOOM 57. Une action sur cette commande 57 provoque l'affichage de l'autre rosace. Le libellé ou le symbole représenté sur cette commande peut avantageusement changer pour refléter la prise en compte de la commande. Il peut ainsi par exemple afficher respectivement une loupe avec un symbole "+" et une loupe avec un symbole "-".

Avantageusement la méthode intègre une étape automatique suivante. L'affichage par défaut est celui de la rosace informative 12. Cependant, dès que l'opérateur actionne l'une des touches du moyen de commande 10 parmi RECOPIER 53, RALLIER 54, ASSERVIR 55 ou DEBRAYER 56, l'interface homme machine 2 bascule l'affichage sur la rosace de commande 13. Ceci prépare l'opération immédiatement suivante de sélection d'un moyen de détection 5 ou de riposte 6. Avantageusement encore, la fin d'une séquence, marquée par l'action VALIDER 58 entraîne automatiquement l'affichage par l'interface homme machine 2 de la rosace d'information 12.

L'invention s'étend aussi à tout système 1 de traitement des menaces 4 dirigées contre un bâtiment 3 comprenant une interface homme machine 2 ou une méthode selon l'une quelconque des caractéristiques précédentes.

## Revendications

1. Interface homme machine (2) d'un système de traitement (1) des menaces (4) pouvant menacer un bâtiment (3), ledit système (1) comportant au moins un moyen de détection (5) de menace (4), au moins un moyen de riposte (6), interface ***caractérisée en ce qu*'**elle comporte une rosace (11) représentative de l'environnement du bâtiment et en ce qu'un symbole graphique (20), indiquant le type d'une menace (4), est localisé sur la rosace (11) en fonction de la situation spatiale de ladite menace (4).

2. Interface homme machine (2) selon la revendication 1, **caractérisée en ce que** la rosace (11) est un diagramme en coordonnées polaires où l'angle représente le gisement et le rayon représente le site.

3. Interface homme machine (2) selon la revendication 2, **caractérisée en ce que** le gisement est un secteur compris entre -180 et 180° et le site est un secteur compris entre - 90 et 90°.

4. Interface homme machine (2) selon l'une des revendications 1 à 3, **caractérisée en ce que** l'origine de la rosace (11) est confondue avec celle retenue pour le pilotage de bâtiment (3).

5. Interface homme machine (2) selon la revendication 4, **caractérisée en ce que** le symbole graphique (20) est un rond (21) ou un soleil (22), fixe ou clignotant, pouvant prendre différentes couleurs, le cas échéant surchargé d'un libellé (23) .

6. Interface homme machine (2) selon l'une quelconque des revendications précédentes, **caractérisée en ce que** le secteur de détection (24) d'un moyen de détection (5) est représenté sur la rosace (11) par une couleur propre associée audit moyen de détection (5).

7. Interface homme machine (2) selon l'une quelconque des revendications précédentes, **caractérisée en ce que** le champ d'action (25) d'un moyen de riposte (6) est représenté sur la rosace (11) par une couleur propre associée audit moyen de riposte (6).

8. Interface homme machine (2) selon l'une quelconque des revendications précédentes, **caractérisée en ce que** le gabarit d'un moyen de détection (5) ou de riposte (6) mobile est représenté sur la rosace (11) par un contour (27) en surépaisseur.

9. Interface homme machine (2) selon l'une quelconque des revendications précédentes, **caractérisée en ce qu'**elle comprend une représentation graphique active (8) des moyens de détection (5) et une représentation graphique active (9) des moyens de riposte (6) superposées à une représentation graphique (7) du bâtiment (3) à une position relative indicative de la localisation sur le bâtiment (3) desdits moyens (5, 6).

10. Interface homme machine (2) selon l'une quelconque des revendications précédentes, **caractérisée en ce que** la représentation graphique (8, 9) d'un moyen de détection (5) ou d'un moyen de riposte (6) reprend la couleur propre associée audit moyen (5, 6).

11. Interface homme machine (2) selon l'une quelconque des revendications précédentes, **caractérisée en ce que** la représentation graphique (8) des moyens de détection (5), la représentation graphique (9) des moyens de riposte (6) et la représentation graphique (7) du bâtiment (3) sont placées au centre de la rosace (11).

12. Interface homme machine (2) selon l'une quelconque des revendications précédentes, **caractérisée en ce qu'**elle comprend une première rosace informative (12) détaillée combinée avec une représentation graphique (7, 8, 9) du bâtiment (3), des moyens de détection (5) et des moyens de riposte (6) réduite et une seconde rosace de commande (13) simplifiée combinée avec une représentation graphique (7, 8, 9) du bâtiment (3), des moyens de détection (5) et des moyens de riposte (6) agrandie.

13. Interface homme machine (2) selon l'une quelconque des revendications précédentes, **caractérisée en ce que** les moyens de détection (5) comprennent au moins une caméra vidéo (30), un viseur (31) ou tout autre moyen de détection.

14. Interface homme machine (2) selon l'une quelconque des revendications précédentes, **caractérisée en ce que** les moyens de riposte (6) comprennent au moins un télémètre (40), au moins un fumigène (43), au moins une arme (45) ou tout autre moyen de riposte.

15. Interface homme machine (2) selon l'une quelconque des revendications précédentes, **caractérisée en ce qu'**elle comprend un moyen de commande (10) comportant des moyens (50) pour commander une action parmi les suivantes : ANNULER DETECTION (51), CONFIRMER DETECTION (52), RECOPIER (53), RALLIER (54), ASSERVIR (55), DEBRAYER (56), ZOOM (57), VALIDER (58) et ANNULER (59).

16. Interface homme machine (2) selon l'une quelconque des revendications précédentes, **caractérisée en ce qu'**elle comprend des calques d'affichage individuellement affichables.

17. Interface homme machine (2) selon l'une quelconque des revendications précédentes, **caractérisée en ce que** la représentation graphique (7) du bâtiment (3), la représentation graphique active (8) des moyens de détection (5), la représentation graphique active (9) des moyens de riposte (6), le moyen de commande (10) et la ou les rosaces (11, 12, 13) sont réalisés au moyen d'un écran tactile.

18. Méthode de traitement des menaces (4) dirigées contre un bâtiment (3), utilisant une interface homme machine (2) selon l'une quelconque des revendications 1 à 17, manoeuvrée par un opérateur, comprenant les étapes successives suivantes:
- un des moyens de détection (5) de menace (4) du système (1) détecte une menace (4) **caractérisée par** son type, d'éventuels attributs d'identification, et sa localisation en site et gisement,
- l'interface homme machine affiche un symbole graphique (20) correspondant au type de la menace (4) à la position correspondante en site et gisement sur la rosace (11, 12, 13), en mode clignotant,
- l'interface homme machine émet éventuellement un signal sonore,
- l'interface homme machine attend une commande de l'opérateur.

19. Méthode de traitement selon la revendication 18, **caractérisée en ce qu'**elle se poursuit par les étapes successives suivantes :
- l'opérateur commande par le moyen de commande (10) l'action ANNULER DETECTION (51),
- l'opérateur sélectionne la menace (4) à annuler en actionnant le symbole graphique actif (20) correspondant représenté sur la rosace (11, 12, 13),
- l'opérateur commande par le moyen de commande (10) l'action VALIDER (58),
- l'interface homme machine efface le symbole graphique (20) de la menace (4), et le cas échéant stoppe l'émission du signal sonore.

20. Méthode de traitement selon la revendication 18, **caractérisée en ce qu'**elle se poursuit par les étapes supplémentaires successives suivantes :
- l'opérateur commande par le moyen de commande (10) l'action CONFIRMER DETECTION (52),
- l'opérateur sélectionne la menace (4) à confirmer en actionnant le symbole graphique actif (20) correspondant représenté sur la rosace (11, 12, 13),
- l'opérateur commande par le moyen de commande (10) l'action VALIDER (58),
- l'interface homme machine affiche le symbole graphique (20) correspondant au type de la menace (4) à la position correspondante en site et gisement sur la rosace (11, 12, 13), en mode fixe.

21. Méthode de traitement des menaces (4) dirigées contre un bâtiment (3), utilisant une interface homme machine (2) selon l'une quelconque des revendications 1 à 17 manoeuvrée par un opérateur, comprenant les étapes supplémentaires successives suivantes :
- l'opérateur commande par le moyen de commande (10) l'action RECOPIER (53),
- l'opérateur sélectionne le moyen de détection (5) à recopier en actionnant la représentation graphique active (8) de ce moyen de détection (5),
- l'opérateur commande par le moyen de commande (10) l'action VALIDER (58),
- l'interface homme machine transmet l'ordre de recopie de l'image dudit moyen de détection (5) sur un écran de visualisation prédéfini.

22. Méthode de traitement des menaces (4) dirigées contre un bâtiment (3), utilisant une interface homme machine (2) selon l'une quelconque des revendications 1 à 17 manoeuvrée par un opérateur, comprenant les étapes successives suivantes :
- l'opérateur commande par le moyen de commande (10) l'action RALLIER (54),
- l'opérateur sélectionne le moyen de détection (5) ou le moyen de riposte (6) mobile destinataire à rallier en actionnant la représentation graphique active (62) de ce moyen destinataire,
- l'opérateur sélectionne le moyen de détection (5) ou le moyen de riposte (6) source du ralliement en actionnant la représentation graphique active (61) de ce moyen source,
- l'opérateur commande par le moyen de commande (10) l'action VALIDER (58),
- l'interface homme machine transmet l'ordre de ralliement dudit moyen destinataire sur l'orientation dudit moyen source.

23. Méthode de traitement des menaces (4) dirigées contre un bâtiment (3), utilisant une interface homme machine (2) selon l'une quelconque des revendications 1 à 17 manoeuvrée par un opérateur, comprenant les étapes supplémentaires successives suivantes :
- l'opérateur commande par le moyen de commande (10) l'action ASSERVIR (55),
- l'opérateur sélectionne le moyen de détection (5) ou le moyen de riposte (6) mobile destinataire à asservir en actionnant la représentation graphique active (62) de ce moyen destinataire,
- l'opérateur sélectionne le moyen de détection (5) ou le moyen de riposte (6) source de l'asservissement en actionnant la représentation graphique active (61) de ce moyen source,
- l'opérateur commande par le moyen de commande (10) l'action VALIDER (58),
- l'interface homme machine transmet l'ordre d'asservissement dudit moyen destinataire sur l'orientation dudit moyen source.

24. Méthode de traitement selon la revendication 23, **caractérisée en ce qu'**elle comprend une étape supplémentaire finale selon laquelle l'interface homme machine affiche une représentation graphique (28) d'un lien d'asservissement entre la représentation graphique (62) du moyen destinataire et la représentation graphique du moyen source (61).

25. Méthode de traitement selon la revendication 24, **caractérisée en ce que** la représentation graphique (28) du lien d'asservissement entre le moyen destinataire et le moyen source est une figure graphique (29) reliant la représentation graphique (62) du moyen destinataire et la représentation graphique (61) du moyen source.

26. Méthode de traitement selon la revendication 24, **caractérisée en ce que** la représentation graphique (28) du lien d'asservissement entre le moyen destinataire et le moyen source est un symbole (29') de la couleur propre associée au moyen source superposé sur la représentation graphique (62) du moyen destinataire.

27. Méthode de traitement des menaces (4) dirigées contre un bâtiment (3), utilisant une interface homme machine (2) selon l'une quelconque des revendications 1 à 17 manoeuvrée par un opérateur, comprenant les étapes successives suivantes :
- l'opérateur commande par le moyen de commande (10) l'action DEBRAYER (56),
- l'opérateur sélectionne le moyen de détection (5) ou le moyen de riposte (6) mobile source à débrayer en actionnant la représentation graphique (61) active de ce moyen source,
- l'opérateur commande par le moyen de commande (10) l'action VALIDER (58),
- l'interface homme machine transmet l'ordre de débrayage dudit moyen source,
- l'interface homme machine supprime, le cas échéant, la représentation graphique (28) du lien d'asservissement entre la représentation graphique (62) du moyen destinataire et la représentation graphique (61) du moyen source.

28. Méthode de traitement selon l'une quelconque des revendications 21 à 27, **caractérisée en ce que** la première étape est remplacée par les deux étapes suivantes :
- l'opérateur commande par le moyen de commande l'une des actions parmi RECOPIER (53), RALLIER (54), ASSERVIR (55), DEBRAYER (56) ou ZOOM (57),
- l'interface homme machine affiche la rosace (12) de commande .

29. Système de traitement (1) des menaces (4) dirigées contre un bâtiment (3) comprenant une interface homme machine (2) selon l'une quelconque des revendications 1 à 17, ou mettant en oeuvre une méthode selon l'une quelconque des revendications 18 à 28.
